(19) Europäisches Patentamt
European Patent Office
Office européen des brevets

(11) **EP 4 372 349 B1**

(12) **EUROPÄISCHE PATENTSCHRIFT**

(45) Veröffentlichungstag und Bekanntmachung des Hinweises auf die Patenterteilung:
**24.12.2025 Patentblatt 2025/52**

(21) Anmeldenummer: **23209003.5**

(22) Anmeldetag: **10.11.2023**

(51) Internationale Patentklassifikation (IPC):
**G01M 11/06** *(2006.01)*

(52) Gemeinsame Patentklassifikation (CPC):
**G01M 11/064**

(54) **VORRICHTUNG UND VERFAHREN ZUR AUSRICHTUNG EINES SCHEINWERFER-EINSTELLPRÜFGERÄTS**

DEVICE AND METHOD FOR ALIGNING A HEADLAMP ADJUSTMENT TEST DEVICE

DISPOSITIF ET PROCÉDÉ D'ALIGNEMENT D'UN APPAREIL DE CONTRÔLE DE POSITION DE PHARE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **10.11.2022 DE 102022211933**

(43) Veröffentlichungstag der Anmeldung:
**22.05.2024 Patentblatt 2024/21**

(73) Patentinhaber: **MAHA Maschinenbau Haldenwang GmbH & Co. KG**
**87490 Haldenwang (DE)**

(72) Erfinder:
• **Schmid, Markus**
**87647 Kraftisried (DE)**
• **Yannic, Bachmann**
**87474 Ahegg (DE)**

(74) Vertreter: **MERH-IP Matias Erny Reichl Hoffmann Patentanwälte PartG mbB**
**Paul-Heyse-Straße 29**
**80336 München (DE)**

(56) Entgegenhaltungen:
GB-A- 2 307 312     US-A1- 2012 224 171
US-B2- 10 989 624     US-B2- 8 582 091

**Beschreibung**

Die vorliegende Offenbarung betrifft eine effiziente und präzise Ausrichtung eines Einstellprüfgeräts zur Überprüfung eines Scheinwerfers eines Kraftfahrzeugs.

US 8 582 091 B2 beschreibt ein Scheinwerfer-Einstellsystem, das ein Scheinwerfereinstellgerät, ein Steuersystem, ein Ausrichtsystem und ein Bildverarbeitungssystem umfasst. Das Scheinwerfereinstellgerät nimmt einen Lichtstrahl von einem Fahrzeugscheinwerfer auf und gibt eine Rückmeldung über dessen Position an das Steuersystem aus. Das Bildverarbeitungssystem wirkt mit dem Scheinwerfereinstellgerät zusammen und nimmt insbesondere eine anfängliche Ausrichtung des Scheinwerfers mit dem optischen System des Scheinwerfereinstellgeräts vor. Dazu ist an einer bekannten Stelle auf dem Scheinwerfer eine Kennzeichnung ausgebildet, die von einer Digitalkamera des Bildverarbeitungssystems detektiert wird, woraufhin das Steuersystem den Scheinwerfer derart positioniert, dass dieser direkt auf das optische System des Scheinwerfereinstellgeräts gerichtet ist. Vor der Ausrichtung des Scheinwerfers wird das Fahrzeug unter Verwendung von Positionsmarken vor dem Scheinwerfer-Einstellsystem positioniert.

GB 2 307 312 A betrifft ein Scheinwerfereinstellgerät für eine Produktionslinie, das ein Portal umfasst, an dem ein fahrbares Rack horizontal verschiebbar angeordnet ist. An dem Rack ist ein Gehäuse vertikal verschiebbar angebracht, in dem eine Kamera enthalten ist. Das Gehäuse umfasst zudem eine Fresnel-Linse deren Brennweite so gewählt ist, dass ein Scheinwerferstrahlbild auf einer Rückwand des Gehäuses entsteht. Zur Einstellung eines Scheinwerfers werden zunächst Scheinwerferstrahlbilder eines optimal ausgerichteten Testscheinwerfers in unterschiedlichen Einstellungen (Abblendlicht, Fernlicht etc.) aufgenommen und diese in digitale Graustufenbilder umgewandelt. Diese Graustufenbilder werden in einer Steuervorrichtung gespeichert und dienen als Referenz für die Einstellung eines typgleichen Schweinwerfers mittels eines Graustufenalgorithmus.

Die Einstellung eines Scheinwerfer-Einstellprüfgeräts (kurz SEP, welches auch als Scheinwerfer-Messgerät bezeichnet werden kann) kann anhand von Fotodioden bewirkt werden, bei denen ein verfahrbarer Roboter, an dem das Einstellprüfgerät angeordnet ist, über die gesamte Länge der horizontalen Achse an der Front eines Fahrzeugs vorbeigeführt wird, um über Fotodioden, welche sich direkt am Einstellprüfgerät befinden, die genaue Position des zu überprüfenden Scheinwerfers zu bestimmen. Dieser Justierprozess ist typischerweise relativ zeitintensiv. Ferner können durch Gegenlicht Fehlerkennungen und/oder Ungenauigkeiten bei der Positionsbestimmung bewirkt werden.

Infolgedessen ist es eine Aufgabe der vorliegenden Offenbarung, die oben genannten Probleme des Stands der Technik zu beheben und insbesondere ein Verfahren und eine entsprechende Vorrichtung anzubieten, welche eine zeiteffiziente und präzise Ausrichtung eines Scheinwerfer-Einstellprüfgeräts relativ zu einem Scheinwerfer ermöglichen.

Zur Lösung der vorstehend genannten Aufgabe werden die Merkmale der unabhängigen Ansprüche vorgeschlagen. Die abhängigen Ansprüche betreffen bevorzugte Ausführungsbeispiele.

Gemäß einem Aspekt wird eine Vorrichtung zur Ausrichtung eines Scheinwerfer-Einstellprüfgeräts relativ zu einem Scheinwerfer (z.B. einem Abblendlicht, einem Fernlicht, einem Nebel-Scheinwerfer, etc.) eines (Kraft-) Fahrzeugs beschrieben. Der Scheinwerfer kann an einer Front des Fahrzeugs angeordnet sein. Das Einstellprüfgerät kann Teil eines Lichtroboters zur Überprüfung von Fahrzeug-Scheinwerfern sein. Die Vorrichtung kann eine Steuervorrichtung des Lichtroboters sein.

Die Vorrichtung ist eingerichtet, während eines Annäherungsmanövers des Fahrzeugs an das Scheinwerfer-Einstellprüfgerät (d.h. während sich das Fahrzeug auf das Einstellprüfgerät zubewegt), anhand einer Kamera zumindest ein Kamerabild des Scheinwerfers des Fahrzeugs oder ein Kamerabild des Fahrzeugs zu erfassen. Durch die Kamera wird eine zeitliche Sequenz von Kamerabildern für eine entsprechende Sequenz von Zeitpunkten während des Annäherungsmanövers erfasst. Die Kamera kann eine Stereo- und/oder 3D Kamera umfassen. Mit anderen Worten, die Kameradaten können stereoskopische und/oder räumliche Information umfassen. Diese Information ermöglicht eine besonders präzise, schnelle und effiziente Ausrichtung des Einstellprüfgeräts relativ zu dem zu überprüfenden Fahrzeug-Scheinwerfer.

Alternativ oder ergänzend kann die Vorrichtung eingerichtet sein, Sensordaten eines (Laser-) Entfernungsmessers zu verwenden, um die Entfernung zwischen dem Einstellprüfgerät und dem Fahrzeug und/oder dem Fahrzeug-Scheinwerfer zu ermitteln. Alternativ oder ergänzend kann die Vorrichtung eingerichtet sein, die zeitliche Sequenz von (zwei-dimensionalen, 2D) Kamerabildern zu verwenden, um die Entfernung zwischen dem Einstellprüfgerät und dem Fahrzeug und/oder dem Fahrzeug-Scheinwerfer zu ermitteln. Dabei kann eine auf maschinellem Lernen basierende Schätzmethode zur Schätzung der Entfernung verwendet werden. Basierend auf der ermittelten Entfernung kann dann eine Ausrichtung des Einstellprüfgeräts relativ zu dem zu überprüfenden Fahrzeug-Scheinwerfer bewirkt werden.

Die Vorrichtung ist eingerichtet, die Position des Scheinwerfers innerhalb des Kamerabildes zu ermitteln. Die Vorrichtung ist außerdem dazu eingerichtet, anhand einer, etwa maschinell-erlernten und/oder auf künstlicher Intelligenz basierender, Bildanalysemethode den Scheinwerfer des Fahrzeugs innerhalb des Kamerabildes zu detektieren und/oder die Position des Scheinwerfers des Fahrzeugs innerhalb des Kamerabildes zu ermitteln. Dabei kann z.B. eine Bounding Box um den Scheinwerfer ermittelt (insbesondere gelegt) werden. Ferner kann die Position der Bounding Box innerhalb des Kamerabildes ermittelt werden. Die Position kann einer Pixelposition innerhalb des Kamerabildes entsprechen.

Die Bildanalysemethode kann ausgebildet sein, ein oder mehrere Objekte in einem (2D oder 3D) Kamerabild zu erkennen und ggf. die Position der ein oder mehreren Objekte zu bestimmen. Die Bildanalysemethode kann somit eine Objekterkennungsmethode umfassen. Dabei kann die Bildanalysemethode (insbesondere ein oder mehrere neuronale Netze der Bildanalysemethode) durch maschinelles Lernen angelernt worden sein.

Alternativ oder ergänzend kann die Vorrichtung eingerichtet sein, anhand der Bildanalysemethode den Typ des Scheinwerfers aus einer Menge von unterschiedlichen Scheinwerfer-Typen zu ermitteln. Die Menge von Scheinwerfer-Typen kann z.B. umfassen: Abblendlicht, Fernlicht und/oder Nebelscheinwerfer. Es kann somit anhand der Bildanalysemethode eine Klassifizierung des Scheinwerfers bewirkt werden.

Die Vorrichtung ist ferner eingerichtet, das Scheinwerfer-Einstellprüfgerät in Abhängigkeit von der ermittelten Position des Scheinwerfers innerhalb des Kamerabildes (z.B. in Abhängigkeit von der ermittelten Pixelposition) relativ zu dem Scheinwerfer des Fahrzeugs auszurichten. Dabei kann das Einstellprüfgerät relativ zu dem Scheinwerfer ausgerichtet werden, um zu bewirken, dass der Scheinwerfer innerhalb des Kamerabildes eine bestimmte Referenzposition (z.B. die Bildmitte des Kamerabildes) aufweist. Die Ausrichtung des Einstellprüfgeräts kann dabei in einer Ebene erfolgen, die im Wesentlichen senkrecht zu der Bewegungsrichtung des Fahrzeugs während des Annäherungsmanövers angeordnet ist.

Es wird somit eine Vorrichtung beschrieben, die es ermöglicht, anhand der Auswertung eines Kamerabildes zu bewirken, dass das Einstellprüfgerät zur Überprüfung eines Scheinwerfers bereits während des Annäherungsmanövers relativ zu dem zu überprüfenden Scheinwerfer ausgerichtet wird. So kann eine besonders zeiteffiziente und präzise Überprüfung des Scheinwerfers ermöglicht werden.

Wie bereits weiter oben dargelegt, kann die Vorrichtung eingerichtet sein, während des Annäherungsmanövers des Fahrzeugs wiederholt, insbesondere periodisch, (an einer Sequenz von aufeinanderfolgenden Zeitpunkten) anhand der Kamera jeweils ein Kamerabild des Scheinwerfers des Fahrzeugs zu erfassen, und die Position des Scheinwerfers innerhalb des jeweiligen Kamerabildes zu ermitteln. Das Scheinwerfer-Einstellprüfgerät kann dann wiederholt in Abhängigkeit von der jeweils ermittelten Position des Scheinwerfers innerhalb des jeweiligen Kamerabildes relativ zu dem Scheinwerfer des Fahrzeugs ausgerichtet werden.

Durch eine derart kontinuierliche Anpassung der Ausrichtung des Einstellprüfgeräts während des Annäherungsmanövers kann eine besonders präzise Ausrichtung des Einstellprüfgeräts für eine besonders präzise Überprüfung des Scheinwerfers ermöglicht werden.

Die Vorrichtung kann eingerichtet sein, die Ausrichtung des Scheinwerfer-Einstellprüfgeräts relativ zu dem Scheinwerfer des Fahrzeugs derart wiederholt während des Annäherungsmanövers des Fahrzeugs anzupassen, dass bei Beendigung des Annäherungsmanövers des Fahrzeugs das Scheinwerfer-Einstellprüfgerät eine Ziel-Ausrichtung zur Durchführung des Messvorgangs für den Scheinwerfer des Fahrzeugs aufweist. Die Ziel-Ausrichtung kann z.B. der Referenzposition innerhalb des Kamerabildes bei Erreichen eines Ziel-Abstands zwischen dem Einstellprüfgerät und dem Scheinwerfer entsprechen. Das Einstellprüfgerät kann somit nach-und-nach bereits während des Annäherungsmanövers auf die Ziel-Ausrichtung hingeführt werden, um eine besonders effiziente und präzise Überprüfung des Scheinwerfers zu ermöglichen.

Die Vorrichtung kann eingerichtet sein, (für ein Kamerabild an einem bestimmten Zeitpunkt) zu bestimmen, dass die ermittelte Position des Scheinwerfer-Einstellprüfgeräts von der bestimmten Referenzposition innerhalb des Kamerabildes, insbesondere von dem Mittelpunkt des Kamerabildes, abweicht. Das Scheinwerfer-Einstellprüfgerät kann dann (an dem jeweiligen Zeitpunkt) ausgerichtet werden, um die Position des Scheinwerfers innerhalb des während des Annäherungsmanövers nachfolgend erfassten Kamerabildes an die Referenzposition anzunähern, und/oder um zu bewirken, dass die Position des Scheinwerfers innerhalb des während des Annäherungsmanövers nachfolgend erfassten Kamerabildes der Referenzposition entspricht.

Es kann somit während des Annäherungsmanövers wiederholt veranlasst werden, dass das Einstellprüfgerät zu der Referenzposition innerhalb des jeweils erfassten Kamerabildes hin verschoben wird. So kann in besonders effizienter und zuverlässiger Weise bewirkt werden, dass das Einstellprüfgerät bei Beendigung des Annäherungsmanövers direkt eine bestimmte Ziel-Ausrichtung zur Durchführung eines Messvorgangs für den Scheinwerfer aufweist.

Die Kamera ist bevorzugt fest mit dem Scheinwerfer-Einstellprüfgerät verbunden, sodass eine Änderung der Ausrichtung des Scheinwerfer-Einstellprüfgeräts zu einer entsprechenden Änderung der Ausrichtung der Kamera relativ zu dem Scheinwerfer des Fahrzeugs führt. So kann eine besonders präzise Ausrichtung des Einstellprüfgeräts auf Basis von Kamerabildern der Kamera ermöglicht werden.

Die Kamera und/oder das Scheinwerfer-Einstellprüfgerät können über ein oder mehrere (elektrisch betriebene) Führungselemente innerhalb einer Ebene bewegbar sein, um die Ausrichtung der Kamera und/oder des Scheinwerfer-Einstellprüfgeräts relativ zu dem Scheinwerfer des Fahrzeugs zu verändern. Die Ebene kann dabei im Wesentlichen senkrecht auf der Bewegungsrichtung des Fahrzeugs bei dem Annäherungsmanöver stehen. So kann eine besonders präzise und komfortable, automatische, Ausrichtung des Einstellprüfgeräts bewirkt werden.

Die Vorrichtung kann eingerichtet sein, auf Basis des (während des Annäherungsmanövers erfassten) Kamerabildes zu bestimmen, ob der Scheinwerfer des Fahrzeugs Licht emittiert oder nicht. Dies kann durch die Verwendung einer Bildanalysemethode bewirkt werden. Wenn bestimmt wird, dass der Scheinwerfer des Fahrzeugs kein Licht emittiert, kann einen Hinweis an einen Nutzer des Fahrzeugs und/oder des Scheinwerfer-Einstellprüfgeräts ausgegeben werden. Der Hinweis kann darauf gerichtet sein, den Nutzer zu veranlassen, den Scheinwerfer des Fahrzeugs zu aktivieren. Alternativ kann der Nutzer ggf. darüber informiert werden, dass der Scheinwerfer des Fahrzeugs defekt ist. So kann die Effizienz des Messvorgangs zur Überprüfung des Scheinwerfers weiter erhöht werden.

Die Vorrichtung kann eingerichtet sein, zu bestimmen, dass der Scheinwerfer des Fahrzeugs im Rahmen des Annäherungsvorgangs einen Ziel-Abstand zu dem Scheinwerfer-Einstellprüfgerät erreicht hat. Die Vorrichtung kann insbesondere eingerichtet sein, auf Basis des zumindest einen Kamerabildes (etwa auf Basis der stereoskopischen und/oder räumlichen Information des Kamerabildes und/oder auf Basis der Sequenz von Kamerabildern) Abstandsinformation in Bezug auf den Abstand zwischen dem Scheinwerfer des Fahrzeugs und dem Scheinwerfer-Einstellprüfgerät zu ermitteln. Es kann dann in besonders effizienter und präziser Weise auf Basis der Abstandsinformation überprüft werden, ob der Scheinwerfer des Fahrzeugs im Rahmen des Annäherungsvorgangs den Ziel-Abstand zu dem Scheinwerfer-Einstellprüfgerät zur Durchführung des Messvorgangs für den Scheinwerfer erreicht hat oder nicht.

Des Weiteren kann die Vorrichtung eingerichtet sein, in Reaktion auf das Bestimmen, dass der Ziel-Abstand erreicht wurde, zu veranlassen (z.B. durch Ausgabe eines Hinweises), dass der Annäherungsvorgang des Fahrzeugs beendet wird. Nach Beendigung des Annäherungsvorgangs kann dann direkt bewirkt werden (ohne, dass es einer weiteren Ausrichtung des Einstellprüfgeräts bedarf), dass das Scheinwerfer-Einstellprüfgerät den Messvorgang für den Scheinwerfer des Fahrzeugs durchführt. So kann eine besonders effiziente und präzise Durchführung eines Messvorgangs ermöglicht werden.

Die Vorrichtung kann eingerichtet sein, innerhalb des (während des Annäherungsmanövers erfassten) Kamerabildes eine Menge von unterschiedlichen Scheinwerfern des Fahrzeugs zu detektieren. Es kann dann (z.B. nach einem bestimmten, vordefinierten Auswahlkriterium) ein erster Scheinwerfer aus der Menge von Scheinwerfern ausgewählt werden, und es kann die Position des ersten Scheinwerfers innerhalb des Kamerabildes ermittelt werden. Ferner kann das Scheinwerfer-Einstellprüfgerät in Abhängigkeit von der ermittelten Position des ersten Scheinwerfers innerhalb des Kamerabildes relativ zu dem ersten Scheinwerfer ausgerichtet werden, um einen Messvorgang für den ersten Scheinwerfer durchzuführen.

Während des Annäherungsmanövers kann somit eine Ausrichtung des ersten Scheinwerfers bewirkt werden, um direkt bei Beendigung des Annäherungsmanövers den Messvorgang für den ersten Scheinwerfer durchführen zu können.

Die Vorrichtung kann ferner eingerichtet sein, (bereits während des Annäherungsmanövers) auf Basis des Kamerabildes Positionsinformation in Bezug auf die Position zumindest eines zweiten Scheinwerfers relativ zu dem ersten Scheinwerfer zu ermitteln. Die Positionsinformation kann ggf. für mehrere zweite (d.h. weitere) Scheinwerfer ermittelt werden. Die Positionsinformation kann z.B. den Querversatz in horizontaler und/oder vertikaler Richtung zwischen dem ersten Scheinwerfer und dem zweiten Scheinwerfer anzeigen (innerhalb der Ebene der ein oder mehreren Führungselemente des Lichtroboters).

Die Vorrichtung kann eingerichtet sein, die Positionsinformation anhand der stereoskopischen und/oder räumlichen Information aus ein oder mehreren Kamerabildern zu ermitteln. Alternativ oder ergänzend kann die Positionsinformation anhand der zeitlichen Sequenz von Kamerabildern ermittelt werden, die an der entsprechenden Sequenz von Zeitpunkten während des Annäherungsmanövers des Fahrzeugs erfasst werden.

Es kann somit bereits während des Annäherungsmanövers (auf Basis von ein oder mehreren Kamerabildern) Positionsinformation in Bezug auf die Relativposition von ein oder mehreren weiteren Scheinwerfern des Fahrzeugs ermittelt werden.

Des Weiteren kann die Vorrichtung eingerichtet sein, das Scheinwerfer-Einstellprüfgerät im Anschluss an den Messvorgang für den ersten Scheinwerfer (ggf. allein und/oder ausschließlich) auf Basis der Positionsinformation relativ zu dem zweiten Scheinwerfer auszurichten, um den Messvorgang für den zweiten Scheinwerfer durchzuführen. Die Positionsinformation kann somit nach Beendigung des Annäherungsmanövers für eine besonders effiziente und präzise Ausrichtung des Einstellprüfgeräts zur Durchführung von Messvorgängen für ein oder mehrere weitere Scheinwerfer verwendet werden.

Gemäß einem weiteren Aspekt wird ein Lichtroboter zur Überprüfung eines Scheinwerfers eines Fahrzeugs beschrieben. Der Lichtroboter umfasst ein Scheinwerfer-Einstellprüfgerät, das ausgebildet ist, einen Messvorgang zur Überprüfung des Scheinwerfers des Fahrzeugs durchzuführen, sowie eine Kamera, die eingerichtet ist, zumindest ein Kamerabild in Bezug auf den Scheinwerfer des Fahrzeugs zu erfassen (während sich das Fahrzeug dem Einstellprüfgerät nähert). Der Lichtroboter umfasst ferner ein oder mehrere (elektrisch betriebene) Führungselemente, die eingerichtet sind, die Ausrichtung des Scheinwerfer-Einstellprüfgeräts relativ zu dem Scheinwerfer des Fahrzeugs zu verändern (z.B. innerhalb einer Ebene, die senkrecht zu der Bewegungsrichtung des Fahrzeugs angeordnet ist). Des Weiteren umfasst der Lichtroboter die in diesem Dokument beschriebene (Steuer-) Vorrichtung.

Gemäß einem weiteren Aspekt wird ein Verfahren zur Ausrichtung eines Scheinwerfer-Einstellprüfgeräts relativ zu einem Scheinwerfer eines (Kraft-) Fahrzeugs beschrieben. Das Verfahren umfasst das Erfassen, während des Annäherungsmanövers des Fahrzeugs an das Scheinwerfer-Einstellprüfgerät und anhand einer (3D-) Kamera, zumindest eines Kamerabildes des Scheinwerfers des Fahrzeugs, sowie das Ermitteln der Position des Scheinwerfers innerhalb des Kamerabildes. Es kann z.B. die Position einer Bounding Box des Scheinwerfers innerhalb des Kamerabildes ermittelt werden. Das Verfahren umfasst ferner das Ausrichten des Scheinwerfer-Einstellprüfgeräts relativ zu dem Scheinwerfer des Fahrzeugs, in Abhängigkeit von der ermittelten Position des Scheinwerfers innerhalb des Kamerabildes.

Gemäß einem weiteren Aspekt wird ein Software (SW) Programm beschrieben. Das SW Programm kann eingerichtet werden, um auf einem Prozessor ausgeführt zu werden, und um dadurch das in diesem Dokument beschriebene Verfahren auszuführen.

Gemäß einem weiteren Aspekt wird ein Speichermedium beschrieben. Das Speichermedium kann ein SW Programm umfassen, welches eingerichtet ist, um auf einem Prozessor ausgeführt zu werden, und um dadurch das in diesem Dokument beschriebene Verfahren auszuführen.

Kurzbeschreibung der Figuren

Figur 1:　zeigt einen beispielhaften Lichtroboter zur Überprüfung eines Scheinwerfers eines Kraftfahrzeugs;

Figur 2a:　zeigt ein beispielhaftes Kamerabild eines Fahrzeugs, das sich dem Lichtroboter nähert

Figur 2b:　zeigt ein Kraftfahrzeug mit einem aktivierten Scheinwerfer;

Figur 2c:　veranschaulicht eine beispielhafte Abstandsmessung anhand von Kameradaten;

Figur 2d:　zeigt ein Fahrzeug mit zusätzlichen Nebenscheinwerfern;

Figur 2e:　zeigt eine beispielhafte Abfolge von Kamerabildern bei einem Annäherungsprozess eines Fahrzeugs; und

Figur 3:　zeigt ein Ablaufdiagramm eines beispielhaften Verfahrens zur Positionierung eines Scheinwerfer-Einstellprüfgeräts.

Im Folgenden werden Beispiele der vorliegenden Offenbarung anhand beispielhafter Figuren detailliert beschrieben. Die Merkmale der Beispiele sind im Ganzen oder teilweise kombinierbar und der vorliegende Gegenstand ist nicht auf die beschriebenen Beispiele beschränkt.

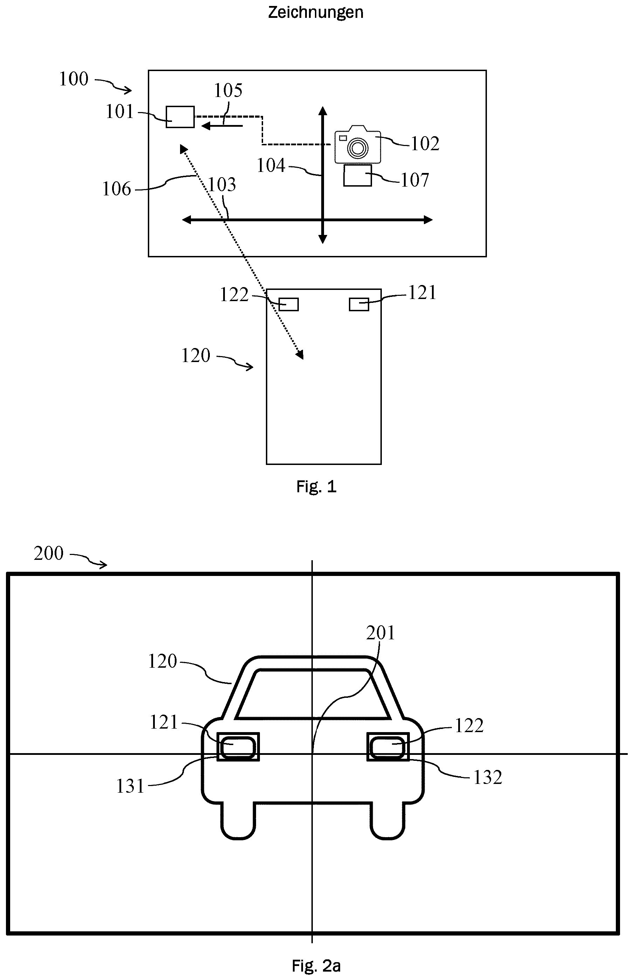

Figur 1 zeigt einen beispielhaften Lichtroboter 100 zur Überprüfung von ein oder mehreren Scheinwerfern 121, 122 eines Kraftfahrzeugs 120. Das Fahrzeug 120 kann durch einen Fahrer vor dem Einstellprüfgerät 107 des Lichtroboters 100 positioniert werden. Das Einstellprüfgerät 107 kann an ein oder mehreren Führungselementen 103, 104 befestigt sein, um eine horizontale und/oder vertikale Verstellung der Position des Einstellprüfgeräts 107 zu ermöglichen (in Bezug auf den Boden, auf dem das Fahrzeug 120 steht). Das Einstellprüfgerät 107 kann durch die ein oder mehreren Führungselemente 103, 104 des Lichtroboters 100 in definierter Weise (z.B. mittig) vor einem Scheinwerfer 121, 122 des Fahrzeugs 120 positioniert werden. Es können dann von dem Einstellprüfgerät 107 Messdaten in Bezug auf das von dem Scheinwerfer 121, 122 emittierte Licht erfasst und ausgewertet werden, z.B. um die Ausrichtung des Scheinwerfers 121, 122 zu überprüfen und ggf. anzupassen.

Wie eingangs dargelegt, befasst sich das vorliegende Dokument damit, eine besonders (zeit-) effiziente und präzise Positionierung des Einstellprüfgeräts 107 vor den ein oder mehreren Scheinwerfern 121, 122 eines Fahrzeugs 120 zu ermöglichen. Zu diesem Zweck weist der in Fig. 1 dargestellte Lichtroboter 100 eine Kamera 102, insbesondere eine 3D und/oder stereoskopische Kamera, auf. Die Kamera 102 kann in definierter Weise, z.B. mit einem bestimmten horizontalen und/oder vertikalen Versatz, relativ zu dem Einstellprüfgerät 107 an den ein oder mehreren Führungselementen 103, 104 des Lichtroboters 100 angeordnet, insbesondere befestigt, sein. Ferner kann die Kamera 102 ausgebildet sein, zusammen mit dem Einstellprüfgerät 107 anhand der ein oder mehreren Führungselemente 103, 104 bewegt zu werden, sodass eine Änderung der Position der Kamera 102 zu einer entsprechenden Änderung der Position des Einstellprüfgeräts 107 führt (für beliebige Positionsänderungen).

Die Kamera 102 weist bevorzugt die gleiche Erfassungsrichtung auf wie das Einstellprüfgerät 107. Insbesondere ist die Kamera 102 bei der Durchführung eines Messvorgangs den ein oder mehreren zu überprüfenden Scheinwerfern 121, 122 eines Fahrzeugs 120 zugewandt. So können von der Kamera 102 Kameradaten 105 in Bezug auf die ein oder mehreren zu überprüfenden Scheinwerfern 121, 122 erfasst und einer (Steuer-) Vorrichtung 101 des Lichtroboters 100 bereitgestellt werden. Die Kameradaten 105 können eine zeitliche Sequenz von Kamerabildern umfassen, die jeweils zumindest einen Ausschnitt des Fahrzeugs 120 anzeigen.

Der Lichtroboter 100, insbesondere die (Steuer-) Vorrichtung 101, kann ausgebildet sein, mit dem Fahrzeug 120 über eine (ggf. drahtlose) Kommunikationsverbindung 106 zu kommunizieren, z.B. um dem Fahrer des Fahrzeugs 120 Anweisungen in Bezug darauf zu übermitteln, wie das Fahrzeug 120 an den Lichtroboter 100 angenähert werden sollte, und/oder wann das Fahrzeug 120 in den Stillstand überführt werden sollte (um den Annäherungsvorgang zu beenden).

Der Lichtroboter 100 kann ausgebildet sein, bereits während eines Annäherungsvorgangs, bei dem sich das Fahrzeug 120 dem Einstellprüfgerät 107 und der Kamera 102 des Lichtroboters 100 nähert, Kameradaten 105 zu erfassen. Die Kameradaten 105, insbesondere ein Kamerabild aus den Kameradaten 105, können ausgewertet werden, um zu erkennen, dass sich das Fahrzeug 120 dem Lichtroboter 100 nähert. Ferner können anhand einer Bildanalysemethode ein oder mehrere Scheinwerfer 121, 122 des sich nähernden Fahrzeugs 120 erkannt werden. Die Bildanalysemethode kann z.B. eine auf Maschinellem Lernen und/oder auf künstlicher Intelligenz (KI) basierende Objekterkennung umfassen. Es kann dann bereits während der Annäherung des Fahrzeugs 120 auf Basis der ein oder mehreren erkannten Scheinwerfer 121, 122 eine Positionierung des Einstellprüfgeräts 107 bewirkt werden, um eine möglichst (zeit-) effiziente und präzise Positionierung des Einstellprüfgeräts 107 zu ermöglichen.

In den Figuren 2a bis 2e sind unterschiedliche Aspekte der Positionierung und/oder der Ausrichtung des Einstellprüfgeräts 107 während des Annäherungsvorgangs des Fahrzeugs 120 dargestellt. Fig. 2a zeigt eines beispielhaftes Kamerabild 200 des sich annähernden Fahrzeugs 120 mit zwei Scheinwerfen 121, 122. Die Mitte 201 des Kamerabildes 200 befindet sich in dem dargestellten Beispiel mittig zwischen den beiden Scheinwerfern 121, 122. Anhand einer Bildanalysemethode können die ein oder mehreren Scheinwerfer 121, 122 des Fahrzeugs 120 erkannt und ggf. als Bounding Boxes 131, 132 repräsentiert werden. Ferner können die Positionen der ein oder mehreren Scheinwerfer 121, 122 (bzw. der entsprechenden Bounding Boxes 131, 132) ermittelt werden.

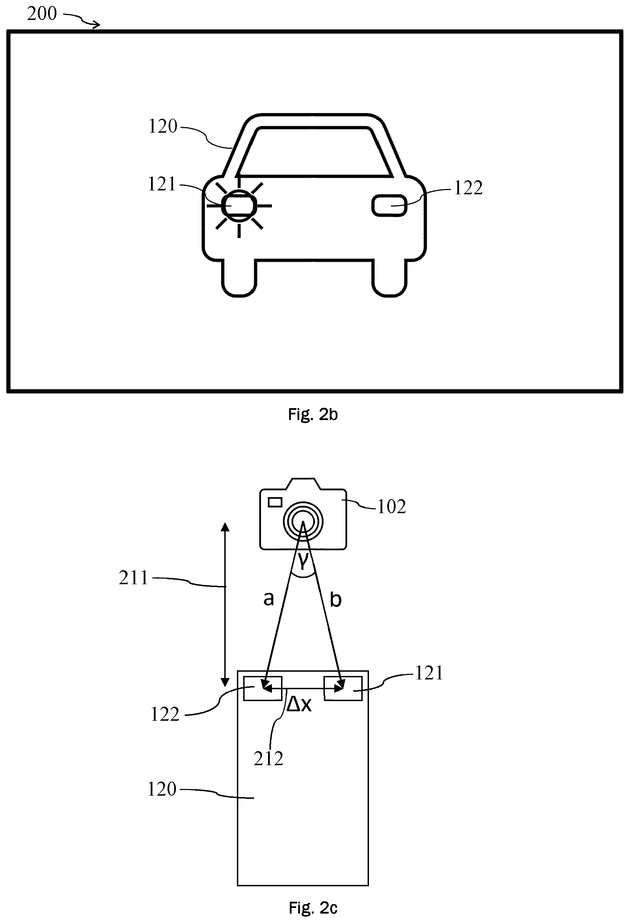

Wie in Fig. 2b dargestellt, kann die Vorrichtung 101 eingerichtet sein, durch Analyse eines Kamerabildes 200 zu erkennen, ob ein Scheinwerfer 121, 122 des Fahrzeugs 120 Licht emittiert oder nicht. In dem dargestellten Beispiel kann z.B. erkannt werden, dass der erste Scheinwerfer 121 Licht emittiert und dass der zweite Scheinwerfer 122 kein Licht emittiert. Es kann dann dem Fahrer des Fahrzeugs 120 eine Rückmeldung in Bezug auf den Status der ein oder mehreren Scheinwerfer 121, 122 gegeben werden, wie z.B. aktiviert, deaktiviert oder defekt. Beispielsweise kann der Fahrer aufgefordert werden, die ein oder mehreren Scheinwerfer 121, 122 zu aktivieren, wenn auf Basis der Kameradaten 105 erkannt wird, dass die ein oder mehreren Scheinwerfer 121, 122 inaktiv sind. So kann die Effizienz des Messverfahrens weiter erhöht werden.

Die Vorrichtung 101 kann eingerichtet sein, auf Basis von ein oder mehreren Kamerabildern 200 Abstandsinformation in Bezug auf den Längsabstand 211 zwischen dem Fahrzeug 120 und dem Lichtroboter 100 und/oder Abstandsinformation in Bezug auf den Querabstand 212 zwischen zwei unterschiedlichen Scheinwerfern 121, 122 des Fahrzeugs 120 zu ermitteln. Die Abstandsinformation kann insbesondere bei Verwendung einer 3D und/oder stereoskopischen Kamera 102 auf Basis der Kameradaten 105 ermittelt werden.

Beispielsweise können, wie beispielhaft in Fig. 2c dargestellt, ein erster Abstand a zwischen der Kamera 102 und dem Scheinwerfer 121, sowie ein zweiter Abstand b zwischen der Kamera 102 und dem Scheinwerfer 122 ermittelt werden. Unter Verwendung der folgenden Formel

$$\Delta x = \sqrt{a^2 + b^2 - 2ab\cos(\gamma)}$$

kann daraus der Querabstand $\Delta x$ 212 zwischen den beiden Scheinwerfern 121, 122 ermittelt werden, wobei y der Winkel zwischen den beiden Strahlen zwischen der Kamera 102 und dem jeweiligen Scheinwerfer 121, 122 ist.

Der Längsabstand 211 zwischen dem Lichtroboter 100 und den Scheinwerfern 121, 122 kann z.B. auf Basis der Kameradaten 105 (einer 3D und/oder stereoskopischen Kamera 102) ermittelt werden. Alternativ oder ergänzend kann der Längsabstand 211 anhand eines (Laser-) Entfernungssensors und/oder auf Basis von 2D Kameradaten 105 unter Verwendung eines KI und/oder maschinell erlernten Schätzalgorithmus ermittelt werden.

Die Vorrichtung 101 kann eingerichtet sein, während eines Annäherungsmanövers des Fahrzeugs 120 wiederholt, insbesondere periodisch, Abstandsinformation in Bezug auf den Längs- und/oder Querabstand 211, 212 zu ermitteln. Das Annäherungsmanöver kann dann in Abhängigkeit von der Abstandsinformation gesteuert werden. Beispielsweise kann der Fahrer des Fahrzeugs 120 aufgefordert werden, das Fahrzeug 120 in den Stillstand zu versetzten (um den Annäherungsvorgang zu beenden), wenn auf Basis der Abstandsinformation erkannt wird, dass ein bestimmter Ziel-Längsabstand zwischen dem Fahrzeug 120 und den ein oder mehreren Scheinwerfern 121, 122 erreicht wird. So kann ein besonders effizienter und präziser Messvorgang ermöglicht werden.

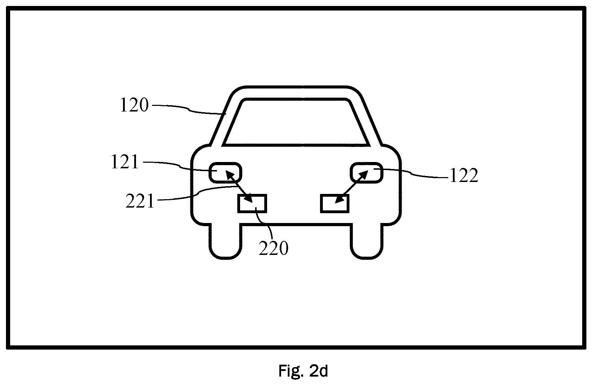

Wie beispielhaft in Fig. 2d dargestellt, können die in diesem Dokument beschriebenen Maßnahmen für ein oder mehrere unterschiedliche Scheinwerfer-Typen verwendet werden. Der Typ eines Scheinwerfers 121, 122 kann dabei auf Basis der Kameradaten 105 anhand einer (auf maschinellem Lernen und/oder auf KI basierenden) Bildanalysemethode ermittelt werden. Beispielsweise kann anhand der beschriebenen Maßnahmen eine Überprüfung von ein oder mehreren Nebel-Scheinwerfern 220 ermöglicht werden.

Während eines Annäherungsvorgangs kann auf Basis der Kameradaten 105 Positionsinformation 221 in Bezug auf die Position des Nebel-Scheinwerfers 220 relativ zu einem (Haupt-) Scheinwerfer 121 des Fahrzeugs 120 ermittelt werden. Die Positionsinformation 221 kann anzeigen, wie der Nebel-Scheinwerfer 220 relativ zu dem Haupt-Scheinwerfer 121 am Fahrzeug 120 angeordnet ist (z.B. in Bezug auf einen Versatz entlang der Querachse und/oder entlang der Hochachse des Fahrzeugs 120). Die Positionsinformation 221 für den Neben-Scheinwerfer 220 kann bereits während des Annäherungsvorgangs ermittelt werden. In entsprechender Weise kann (bereits während des Annäherungsvorgangs) Positionsinformation 221 für ein oder mehrere weitere Scheinwerfer 122 des Fahrzeugs 100 ermittelt werden.

Die Positionsinformation 221 für die ein oder mehreren weiteren Scheinwerfer 122, 220 kann während eines Messvorgangs für einen weiteren Scheinwerfer 122, 220 dazu verwendet werden, das Einstellprüfgerät 107 vor dem weiteren Scheinwerfer 122, 220 zu platzieren, um diesen weiteren Scheinwerfer 122, 220 zu überprüfen. Insbesondere kann das Einstellprüfgerät 107 auf Basis der (während des Annäherungsvorgangs ermittelten) Positionsinformation 221 für den jeweiligen weiteren Scheinwerfer 122, 220 direkt im Anschluss an den Messvorgang für den Haupt-Scheinwerfer 121 auf den weiteren Scheinwerfer 122, 220 ausgerichtet werden (ohne dass der weitere Scheinwerfer 122, 220 zuvor gesucht werden muss). Dies kann in entsprechender Weise für die Messvorgänge für alle weiteren Scheinwerfer 122, 220 erfolgen. Durch das vorhergehende Ermitteln der Positionsinformation 221 ist der relative Abstand zwischen dem jeweiligen weiteren Scheinwerfer 122, 220 und dem Haupt-Scheinwerfer 121 bekannt und kann daher für die beschleunigte Durchführung der Messvorgänge für die ein oder mehreren weiteren Scheinwerfer 122, 220 verwendet werden.

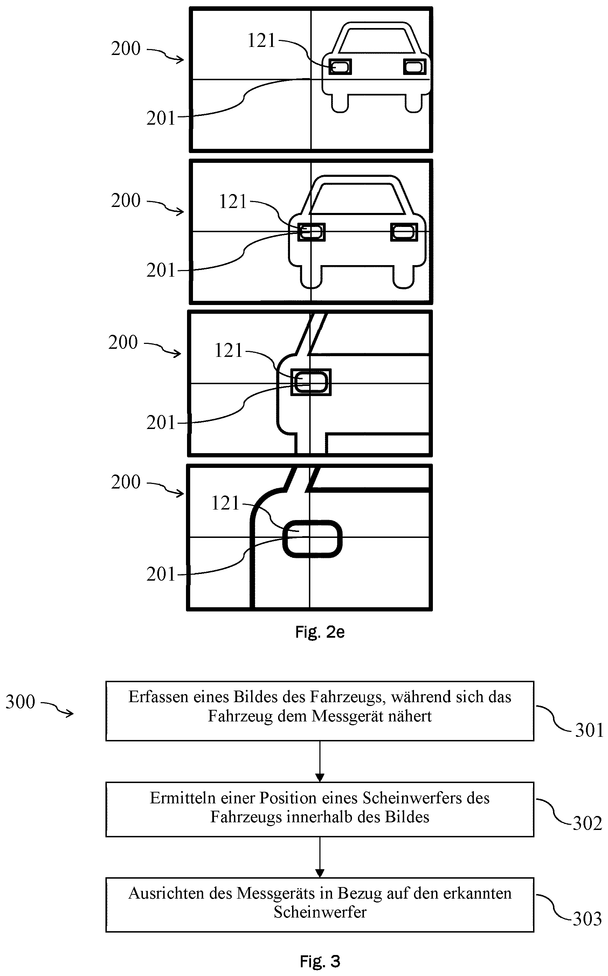

Fig. 2e zeigt eine beispielhafte Abfolge von Kamerabildern 200, die während des Annäherungsvorgangs des Fahrzeugs 120 erfasst wurden. Das oberste Kamerabild 200 zeigt die gesamte Front des Fahrzeugs 120, und es kann auf Basis dieses Kamerabildes 200 (unter Verwendung einer Bildanalysemethode, insbesondere einer Objekterkennungsmethode) eine Menge von ein oder mehreren Scheinwerfern 121, 122, 220 des Fahrzeugs 120 ermittelt werden. Ferner kann ein Scheinwerfer 121 aus der Menge von Scheinwerfern 121, 122, 220 als Haupt-Scheinwerfer für den weiteren Annäherungsvorgang ausgewählt werden. Für die null, ein oder mehreren weiteren Scheinwerfer 122, 220 aus der Menge von Scheinwerfern 121, 122, 220 kann dann Positionsinformation 212, 221 ermittelt werden, die jeweils die relative Position des weiteren Scheinwerfers 122, 122 relativ zu dem Haupt-Scheinwerfer 121 anzeigt.

Die Positionsinformation 212, 221 kann auf Basis eines Kamerabildes 200 und/oder auf Basis einer zeitlichen Sequenz von Kamerabildern 200 ermittelt werden.

Während des Annäherungsmanövers des Fahrzeugs 120 können die Kamera 102 und das Einstellprüfgerät 107 durch die ein oder mehreren Führungselemente 103, 104 in Abhängigkeit von der Position des Haupt-Scheinwerfers 121 innerhalb der einzelnen Kamerabilder 200 verfahren werden, insbesondere derart, dass sich der Haupt-Scheinwerfer 121 innerhalb der einzelnen Kamerabilder 200 ein an einer bestimmten Referenzposition 201, z.B. in der Mitte des jeweiligen Kamerabildes 200, befindet. Dies ist beispielhaft in der Abfolge von Kamerabildern 200 (von Oben nach Unten) in Fig. 2e dargestellt. In dem obersten Kamerabild 200 ist der Haupt-Scheinwerfer 121 noch nicht an der Referenzposition 201 innerhalb des Kamerabildes 200 angeordnet. Die Kamera 102 und das Einstellprüfgerät 107 können daraufhin durch die ein oder mehreren Führungselemente 103, 104 verfahren werden, um zu bewirken, dass sich der Haupt-Scheinwerfer 121 innerhalb der folgenden Kamerabilder 200 an der Referenzposition 201 befindet. Es kann daraufhin während des Annäherungsvorgangs wiederholt eine Anpassung der Position der Kamera 102 und des Einstellprüfgeräts 107 bewirkt werden, um zu bewirken, dass der Haupt-Scheinwerfer 122 innerhalb der jeweiligen Kamerabilder 200 jeweils an der Referenzposition 201 angeordnet ist.

Es kann somit bereits während des Annäherungsmanövers des Fahrzeugs 120 eine Platzierung des Einstellprüfgeräts 107 vor dem Haupt-Scheinwerfer 121 bewirkt werden, sodass nach Beendigung des Annäherungsmanövers ohne Zeitverzug mit der Vermessung des Haupt-Scheinwerfers 121 begonnen werden kann.

Im Anschluss an die Vermessung des Haupt-Scheinwerfers 121 kann die (während des Annäherungsmanövers ermittelte) Positionsinformation 212, 221 für einen weiteren Scheinwerfer 122, 220 aus der Menge von Scheinwerfern 121, 122, 220 dazu verwendet werden, das Einstellprüfgerät 107 anhand der ein oder mehreren Führungselemente 103, 104 vor dem weiteren Scheinwerfer 122, 220 zu platzieren. Dazu sind typischerweise keine weiteren Daten erforderlich, sodass die Umplatzierung des Einstellprüfgeräts 107 in besonders effizienter Weise bewirkt werden kann. In entsprechender Weise kann für alle weiteren Scheinwerfer 122, 220 vorgegangen werden.

Es werden somit ein Verfahren und eine entsprechende Vorrichtung 101 beschrieben, die es ermöglichen, ein oder mehrere Scheinwerfer 121, 122, 220 eines Fahrzeuges 120 zu detektieren und deren Position zu bestimmen. Die ein oder mehreren Scheinwerfer 121, 122, 220 werden dabei bereits beim Heranfahren des Fahrzeugs 120 an das Prüf-bzw. Messgerät 107 detektiert und nicht erst, wenn das Fahrzeug 120 vor dem Lichtroboter 100, insbesondere vor dem Einstellprüfgerät 107, positioniert ist. So kann ein Zeitgewinn in Bezug auf die Lichtmessung eines Scheinwerfers 121, 122, 220 erreicht werden.

Der in diesem Dokument beschriebene Lichtroboter 100 umfasst eine Kamera 102 zur Detektion und Positionsbestimmung der ein oder mehreren Scheinwerfer 121, 122, 220 eines Fahrzeuges 120. Durch den Einsatz einer 3D-fähigen Kamera 102 (oder alternativ oder ergänzend durch den Einsatz eines (Laser-) Entfernungsmessers oder durch Schätzung der Entfernung aus einem 2D-Kamerabild 200 unter Verwendung einer auf maschinellem Lernen basierenden Schätzmethode) kann zudem in präziser Weise die räumliche Position der ein oder mehreren Scheinwerfer 121, 122, 220 bestimmt werden. Beim Heranfahren eines Fahrzeuges 120 an das Einstellprüfgerät 107 kann (auf Basis der Kameradaten 105) erkannt werden, ob ein oder mehrere Scheinwerfer 121, 122, 220 nicht leuchten. Ferner kann bereits beim Heranfahren des Fahrzeuges 120 an das Einstellprüfgerät 107 über die 3D-fähige Kamera 102 der Abstand 212 zwischen den einzelnen Scheinwerfern 121, 122 ermittelt werden.

Während das Fahrzeug 120 an das Einstellprüfgerät 107 heranfährt, kann laufend die Position eines (Haupt-) Scheinwerfers 121 ermittelt werden. Der Roboter 100 kann dabei die an dem beweglichen Einstellprüfgerät 107 montierte Kamera 102 durch horizontale und vertikale Bewegungen so ausrichten, dass sich der erste zu messende (Haupt-) Scheinwerfer 121 stets in der Mitte 201 des jeweiligen Kamerabildes 200 befindet, während das Fahrzeug 120 auf den Lichtroboter 100 zufährt.

Beim Heranfahren des Fahrzeuges 120 an das Einstellprüfgerät 107 kann anhand der Messung des Abstandes 211 zwischen dem (Haupt-) Scheinwerfer 121 und dem Einstellprüfgerät 107 eine Rückmeldung an den Fahrer des Fahrzeugs 120 gegeben werden, wenn der gewünschte Ziel-Abstand erreicht wurde.

Dadurch, dass bereits beim Heranfahren des Fahrzeuges 120 an den Prüfstand 100 erkannt werden kann, ob einzelne oder alle Scheinwerfer 121, 122, 220 nicht leuchten, kann dem Anwender des Prüfstands 100 hierüber frühzeitig eine Meldung angezeigt werden. Die Meldung in Bezug auf einen Scheinwerfer 121, 122, 220 kann beispielsweise "Scheinwerfer einschalten" oder "Scheinwerfer defekt" sein. Dadurch kann der Prüfablauf optimiert werden.

Beim Heranfahren eines Fahrzeuges 120 können die Abstände 212 zwischen den einzelnen Scheinwerfern 121, 122, 220 ermittelt werden. Dies gilt auch für das Abblendlicht und/oder Fernlicht 121, 122 und/oder für die ein oder mehreren Nebelscheinwerfer 220. Wenn diese Abstände 212 bekannt sind, kann direkt im Anschluss an die Messung des ersten (Haupt-) Scheinwerfers 121 das Einstellprüfgerät 107 zum nächsten Scheinwerfer 122, 220 gefahren werden, ohne dass dazu eine erneute Suche des nächsten Scheinwerfers 122, 220 erforderlich ist. Dadurch kann der Prüfablauf beschleunigt werden.

Dadurch, dass beim Heranfahren des Fahrzeuges 120 das Einstellprüfgerät 107 fortlaufend auf den ersten zu messenden Scheinwerfer 121 ausgerichtet wird, kann sofort mit der Messung dieses Scheinwerfers 121 begonnen werden, sobald das Fahrzeug 120 auf den gewünschten Ziel-Abstand herangefahren wurde. Dadurch kann der Prüfablauf beschleunigt werden.

Durch die Fähigkeit räumliche Abstände 211, 212 messen zu können, kann dem Anwender beim Heranfahren des Fahrzeuges 120 eine Rückmeldung gegeben werden, wenn der gewünschte Ziel-Abstand zwischen den ein oder mehreren Scheinwerfern 121, 122, 220 und dem Einstellprüfgerät 107 erreicht wurde.

Durch den Einsatz einer Kamera 102 und der Auswertung der Kamerabilder 200 mitVerfahren aus dem Bereich der Computer Vision und dem Maschinellem Lernen ist es möglich zu erkennen, ob ein oder mehrere Scheinwerfer 121, 122, 220 im jeweiligen Kamerabild 200 enthalten sind, und es kann deren 2D-Position innerhalb des jeweiligen Kamerabildes 200 bestimmt werden. Dieses Verfahren funktioniert unabhängig vom Fahrzeugtyp des jeweiligen Fahrzeugs 120 und benötigt keine Datenbank möglicher Fahrzeugtypen und deren jeweiligen Scheinwerferpositionen.

Die Erkennung und Positionsbestimmung der ein oder mehreren Scheinwerfer 121, 122, 220 kann bereits durchgeführt werden, während das Fahrzeug 120 an den Lichtroboter 100 heranfährt. Dadurch kann sich das Scheinwerfer-Einstellprüfgerät 107 bereits während dem Heranfahren des Fahrzeuges 120 auf den ersten zu prüfenden Scheinwerfer 121 ausrichten, sodass direkt mit der Messung dieses Scheinwerfers 121 begonnen werden kann, wenn das Fahrzeug 120 den gewünschten Messabstand erreicht hat. So wird der Prüfablauf beschleunigt.

Weiterhin können mit Hilfe einer 3D-fähigen Kamera 102 bereits beim Heranfahren des Fahrzeuges 120 die relativen Abstände 122, 221 der einzelnen Scheinwerfer 121, 122, 220 zueinander ermittelt werden, sodass nach Messung des ersten Scheinwerfers 121 bereits bekannt ist, wie der Lichtroboter 100 verfahren muss, um sich vor den ein oder mehreren weiteren Scheinwerfern 122, 220 zu positionieren. Es ist somit keine weitere Suche der ein oder mehreren weiteren Scheinwerfer 122, 220 erforderlich und der Prüfablauf kann weiter beschleunigt werden.

Insbesondere bei Einsatz einer 3D-fähigen Kamera 102 kann der (Längs-) Abstand 211 des Fahrzeuges 120 bzw. der ein oder mehreren Scheinwerfer 121, 122 zum Scheinwerfer-Einstellprüfgerät 107 ermittelt werden, wodurch dem Benutzer beim Heranfahren des Fahrzeuges 120 an den Lichtroboter eine Rückmeldung gegeben werden kann, wenn der gewünschte Abstand zum Scheinwerfer-Einstellprüfgerät 107 erreicht wurde.

Durch den Einsatz einer Kamera 102 und maschinellem Lernen und/oder KI können auch Scheinwerfer 121, 122, 220 erkannt werden, welche ausgeschaltet sind oder aufgrund eines Defektes nicht leuchten. Für das Anlernen können bereits vorhandene Bilddaten von Scheinwerfern in verschiedenen Zuständen sowie von Fahrzeugen verwendet werden und/oder es können Lerndurchläufe mit echten Fahrzeugen oder anhand von Videoeinwänden durchgeführt werden. Daher kann dem Benutzer schon beim Heranfahren des Fahrzeuges 120 an den Lichtroboter 100 eine Rückmeldung gegeben und der Prüfablauf beschleunigt werden, wenn keine Scheinwerfer 121, 122, 220 leuchten, was darauf deutet, dass das Licht ausgeschaltet ist, oder wenn nur ein oder mehrere einzelne Scheinwerfer 121 leuchten, beispielsweise das Abblendlicht 121 auf der rechten Seite, nicht aber auf der linken Seite, was darauf deutet, dass ein Scheinwerfer 122 defekt ist.

Fig. 3 zeigt ein Ablaufdiagramm eines (ggf. Computer-implementierten) Verfahrens 300 zur Ausrichtung eines Scheinwerfer-Einstellprüfgeräts 107 relativ zu einem Scheinwerfer 121, 122, 220 eines (Kraft-) Fahrzeugs 120 (z.B. eines PKWs, eines LKWs, eines Busses, eines Motorrads, etc.). Das Einstellprüfgerät 107 kann Teil eines Lichtroboters 100 sein.

Das Verfahren 300 umfasst das Erfassen 301, während eines Annäherungsmanövers des Fahrzeugs 120 an das Scheinwerfer-Einstellprüfgerät 107 und anhand einer Kamera 102 (des Lichtroboters 100), zumindest eines Kamerabildes 200 des Scheinwerfers 121, 122, 220 des Fahrzeugs 120. Es wird somit bereits ein Kamerabild 200 erfasst, während sich das Fahrzeug 120 noch auf das Einstellprüfgerät 107 zubewegt.

Das Verfahren 300 umfasst ferner das Ermitteln 302 einer Position des Scheinwerfers 121, 122, 220 innerhalb des Kamerabildes 200. Zu diesem Zweck kann eine (auf maschinellem Lernen und/oder auf KI basierende) Bildanalysemethode verwendet werden. Die Position des Scheinwerfers 121, 122, 220 kann die Koordinaten des Scheinwerfers 121, 122, 220 (z.B. des Mittelpunktes oder eines Eckpunktes des Scheinwerfers 121, 122, 220) innerhalb der Bildebene des Kamerabildes 200 anzeigen.

Des Weiteren umfasst das Verfahren 300 das Ausrichten 303 des Scheinwerfer-Einstellprüfgeräts 107 relativ zu dem Scheinwerfer 121, 122, 220 des Fahrzeugs 120, in Abhängigkeit von der ermittelten Position des Scheinwerfers 121, 122, 220 innerhalb des Kamerabildes 200. Es kann somit (bereits während des Annäherungsmanövers) eine relative Positionierung des Einstellprüfgeräts 107 relativ zu dem (zu überprüfenden) Scheinwerfer 121, 122, 220 bewirkt werden, insbesondere derart, dass das Einstellprüfgerät 107 bei Beendigung des Annäherungsmanövers direkt eine Ziel-Positionierung für die Durchführung des Messvorgangs für den Scheinwerfer 121, 122, 220 aufweist. Es kann somit eine besonders effiziente und präzise Überprüfung eines Scheinwerfers 121, 122, 220 ermöglicht werden.

**Patentansprüche**

1. Vorrichtung (101) zur Ausrichtung eines Scheinwerfer-Einstellprüfgeräts (107) relativ zu einem Scheinwerfer (121, 122, 220) eines Fahrzeugs (120); wobei die Vorrichtung (101) signaltechnisch mit einer Kamera (102) verbunden und dazu eingerichtet ist,

- während eines Annäherungsmanövers des Fahrzeugs (120) an das Scheinwerfer-Einstellprüfgerät (107), anhand der Kamera (102) eine zeitliche Sequenz von Kamerabildern (200) des Scheinwerfers (121, 122, 220) des Fahrzeugs (120) für eine entsprechende Sequenz von Zeitpunkten zu erfassen;
- anhand einer maschinell-erlernten und/oder auf künstlicher Intelligenz basierender Bildanalysemethode den Scheinwerfer des Fahrzeugs innerhalb eines Kamerabildes zu detektieren und eine Position des Scheinwerfers (121, 122, 220) innerhalb des Kamerabildes (200) zu ermitteln; und
- das Scheinwerfer-Einstellprüfgerät (107) in Abhängigkeit von der ermittelten Position des Scheinwerfers (121, 122, 220) innerhalb des Kamerabildes (200) relativ zu dem Scheinwerfer (121, 122, 220) des Fahrzeugs (120) auszurichten.

2. Vorrichtung (101) gemäß Anspruch 1, wobei die Vorrichtung (101) eingerichtet ist, während des Annäherungsmanövers des Fahrzeugs (120) wiederholt, insbesondere periodisch,

- anhand der Kamera (102) ein Kamerabild (200) des Scheinwerfers (121, 122, 220) des Fahrzeugs (120) zu erfassen;
- die Position des Scheinwerfers (121, 122, 220) innerhalb des jeweiligen Kamerabildes (200) zu ermitteln; und
- das Scheinwerfer-Einstellprüfgerät (107) in Abhängigkeit von der jeweils ermittelten Position des Scheinwerfers (121, 122, 220) innerhalb des jeweiligen Kamerabildes (200) relativ zu dem Scheinwerfer (121, 122, 220) des Fahrzeugs (120) auszurichten.

3. Vorrichtung (101) gemäß Anspruch 2, wobei die Vorrichtung (101) eingerichtet ist, die Ausrichtung des Scheinwerfer-Einstellprüfgeräts (107) relativ zu dem Scheinwerfer (121, 122, 220) des Fahrzeugs (120) derart wiederholt während des Annäherungsmanövers des Fahrzeugs (120) anzupassen, dass bei Beendigung des Annäherungsmanövers des Fahrzeugs (120) das Scheinwerfer-Einstellprüfgerät (107) eine Ziel-Ausrichtung zur Durchführung eines Messvorgangs für den Scheinwerfer (121, 122, 220) des Fahrzeugs (120) aufweist.

4. Vorrichtung (101) gemäß einem der vorhergehenden Ansprüche, wobei die Vorrichtung (101) eingerichtet ist,

- zu bestimmen, dass die ermittelte Position des Scheinwerfer-Einstellprüfgeräts (107) von einer Referenzposition (201) innerhalb des Kamerabildes (200), insbesondere von einem Mittelpunkt des Kamerabildes (200), abweicht; und
- das Scheinwerfer-Einstellprüfgerät (107) auszurichten, um

- die Position des Scheinwerfers (121, 122, 220) innerhalb eines während des Annäherungsmanövers nachfolgend erfassten Kamerabildes (200) an die Referenzposition (201) anzunähern; und/oder
- zu bewirken, dass die Position des Scheinwerfers (121, 122, 220) innerhalb eines während des Annäherungsmanövers nachfolgend erfassten Kamerabildes (200) der Referenzposition (201) entspricht.

5. Vorrichtung (101) gemäß einem der vorhergehenden Ansprüche, wobei die Vorrichtung (101) eingerichtet ist,

- innerhalb des Kamerabildes (200) eine Menge von unterschiedlichen Scheinwerfern (121, 122, 220) des Fahrzeugs (120) zu detektieren;
- einen ersten Scheinwerfer (121) aus der Menge von Scheinwerfern (121, 122, 220) auszuwählen;
- die Position des ersten Scheinwerfers (121) innerhalb des Kamerabildes (200) zu ermitteln; und
- das Scheinwerfer-Einstellprüfgerät (107) in Abhängigkeit von der ermittelten Position des ersten Scheinwerfers (121) innerhalb des Kamerabildes (200) relativ zu dem ersten Scheinwerfer (121) auszurichten, um einen Messvorgang für den ersten Scheinwerfer (121) durchzuführen.

6. Vorrichtung (101) gemäß Anspruch 5, wobei die Vorrichtung (101) eingerichtet ist,

- auf Basis des Kamerabildes (200) Positionsinformation (212, 221) in Bezug auf eine Position zumindest eines zweiten Scheinwerfers (122, 220) relativ zu dem ersten Scheinwerfer (121) zu ermitteln; und
- das Scheinwerfer-Einstellprüfgerät (107) im Anschluss an den Messvorgang für den ersten Scheinwerfer (121) auf Basis der Positionsinformation (212, 221) relativ zu dem zweiten Scheinwerfer (122, 220) auszurichten, um einen Messvorgang für den zweiten Scheinwerfer (122, 220) durchzuführen.

7. Vorrichtung (101) gemäß Anspruch 6, wobei die Positionsinformation (212, 221) einen Querversatz in horizontaler und/oder vertikaler Richtung zwischen dem ersten Scheinwerfer (121) und dem zweiten Scheinwerfer (122, 220) anzeigt.

8. Vorrichtung (101) gemäß einem der Ansprüche 6 bis 7, wobei die Vorrichtung (101) eingerichtet ist, die Positionsinformation (212, 221) zu ermitteln,

- anhand von stereoskopischer und/oder räumlicher Information aus dem Kamerabild (200); und/oder
- anhand einer zeitlichen Sequenz von Kamerabildern (200), die an einer entsprechenden Sequenz von Zeitpunkten während des Annäherungsmanövers des Fahrzeugs (120) erfasst werden.

9. Vorrichtung (101) gemäß einem der vorhergehenden Ansprüche, wobei die Vorrichtung (101) eingerichtet ist,

- zu bestimmen, dass der Scheinwerfer (121, 122, 220) des Fahrzeugs (120) im Rahmen des Annäherungsvorgangs einen Ziel-Abstand zu dem Scheinwerfer-Einstellprüfgerät (107) erreicht hat;
- in Reaktion auf das Bestimmen zu veranlassen, dass der Annäherungsvorgang des Fahrzeugs (120) beendet wird; und
- nach Beendigung des Annäherungsvorgangs zu bewirken, dass das Scheinwerfer-Einstellprüfgerät (107) einen Messvorgang für den Scheinwerfer (121, 122, 220) des Fahrzeugs (120) durchführt.

10. Vorrichtung (101) gemäß einem der vorhergehenden Ansprüche, wobei die Vorrichtung (101) eingerichtet ist,

- auf Basis des zumindest einen Kamerabildes (200) Abstandsinformation in Bezug auf einen Abstand (211) zwischen dem Scheinwerfer (121, 122, 220) des Fahrzeugs (120) und dem Scheinwerfer-Einstellprüfgerät (107) zu ermitteln; und
- auf Basis der Abstandsinformation zu überprüfen, ob der Scheinwerfer (121, 122, 220) des Fahrzeugs (120) im Rahmen des Annäherungsvorgangs einen Ziel-Abstand zu dem Scheinwerfer-Einstellprüfgerät (107) zur Durchführung eines Messvorgangs für den Scheinwerfer (121, 122, 220) erreicht hat oder nicht.

11. Vorrichtung (101) gemäß einem der vorhergehenden Ansprüche, wobei die Vorrichtung (101) eingerichtet ist,

- auf Basis des Kamerabildes (200) zu bestimmen, ob der Scheinwerfer (121, 122, 220) des Fahrzeugs (120) Licht emittiert oder nicht; und
- wenn bestimmt wird, dass der Scheinwerfer (121, 122, 220) des Fahrzeugs (120) kein Licht emittiert, einen Hinweis an einen Nutzer des Fahrzeugs (120) und/oder des Scheinwerfer-Einstellprüfgeräts (107) auszugeben, insbesondere um

    - den Nutzer zu veranlassen, den Scheinwerfer (121, 122, 220) des Fahrzeugs (120) zu aktivieren; und/oder
    - den Nutzer darüber zu informieren, dass der Scheinwerfer (121, 122, 220) des Fahrzeugs (120) defekt ist.

12. Vorrichtung (101) gemäß einem der vorhergehenden Ansprüche, wobei die Vorrichtung (101) eingerichtet ist, anhand einer, insbesondere auf maschinellem Lernen und/oder auf künstlicher Intelligenz basierenden, Bildanalysemethode

    - den Scheinwerfer (121, 122, 220) des Fahrzeugs (120) innerhalb des Kamerabildes (200) zu detektieren; und/oder
    - die Position des Scheinwerfers (121, 122, 220) des Fahrzeugs (120) innerhalb des Kamerabildes (200) zu ermitteln; und/oder
    - einen Typ des Scheinwerfers (121, 122, 220) aus einer Menge von unterschiedlichen Scheinwerfer-Typen zu ermitteln; wobei die Menge von Scheinwerfer-Typen insbesondere umfasst: Abblendlicht, Fernlicht und/oder Nebelscheinwerfer.

13. Vorrichtung (101) gemäß einem der vorhergehenden Ansprüche, wobei

    - die Kamera (102) eine Stereo- und/oder 3D Kamera umfasst; und/oder
    - die Kamera (102) fest mit dem Scheinwerfer-Einstellprüfgerät (107) verbunden ist, sodass eine Änderung der Ausrichtung des Scheinwerfer-Einstellprüfgeräts (107) zu einer entsprechenden Änderung einer Ausrichtung der Kamera (102) relativ zu dem Scheinwerfer (121, 122, 220) des Fahrzeugs (120) führt; und/oder
    - die Kamera (102) und/oder das Scheinwerfer-Einstellprüfgerät (107) über ein oder mehrere Führungselemente (103, 104) innerhalb einer Ebene bewegbar sind, um die Ausrichtung der Kamera (102) und/oder des Scheinwerfer-Einstellprüfgeräts (107) relativ zu dem Scheinwerfer (121, 122, 220) des Fahrzeugs (120) zu verändern.

14. Lichtroboter (100) zur Überprüfung eines Scheinwerfers (121, 122, 220) eines Fahrzeugs (120); wobei der Lichtroboter (100) umfasst,

    - ein Scheinwerfer-Einstellprüfgerät (107), das ausgebildet ist, einen Messvorgang zur Überprüfung des Scheinwerfers (121, 122, 220) des Fahrzeugs (120) durchzuführen;
    - eine Kamera (102), die eingerichtet ist, eine zeitliche Sequenz von Kamerabildern (200) in Bezug auf den Scheinwerfer (121, 122, 220) des Fahrzeugs (120) für eine entsprechende Sequenz von Zeitpunkten zu erfassen;
    - ein oder mehrere Führungselemente (103, 104), die eingerichtet sind, eine Ausrichtung des Scheinwerfer-Einstellprüfgeräts (107) relativ zu dem Scheinwerfer (121, 122, 220) des Fahrzeugs (120) zu verändern; und
    - eine Vorrichtung (101) gemäß einem der vorhergehenden Ansprüche.

15. Verfahren (300) zur Ausrichtung eines Scheinwerfer-Einstellprüfgeräts (107) relativ zu einem Scheinwerfer (121, 122, 220) eines Fahrzeugs (120); wobei das Verfahren (300) umfasst,

    - Erfassen (301), während eines Annäherungsmanövers des Fahrzeugs (120) an das Scheinwerfer-Einstellprüfgerät (107) und anhand einer Kamera (102), eine zeitliche Sequenz von Kamerabildern (200) des Scheinwerfers (121, 122, 220) des Fahrzeugs (120) für eine entsprechende Sequenz von Zeitpunkten;
    - Detektieren des Scheinwerfers (121, 122, 220) anhand einer maschinell-erlernten und/oder auf künstlicher Intelligenz basierender Bildanalysemethode innerhalb eines Kamerabildes (200) und Ermitteln (302) einer Position des Scheinwerfers (121, 122, 220) innerhalb des Kamerabildes (200); und
    - Ausrichten (303) des Scheinwerfer-Einstellprüfgeräts (107) relativ zu dem Scheinwerfer (121, 122, 220) des Fahrzeugs (120), in Abhängigkeit von der ermittelten Position des Scheinwerfers (121, 122, 220) innerhalb des Kamerabildes (200).

**Claims**

1. Device (101) for aligning a headlamp setting test device (107) relative to a headlamp (121, 122, 220) of a vehicle (120); wherein the device (101) is connected in terms of signal technology to a camera (102) and is configured

    - during an approach maneuver of the vehicle (120) to the headlamp setting test device (107), to detect a temporal sequence of camera images (200) of the headlamp (121, 122, 220) of the vehicle (120) for a corresponding sequence of points in time on the basis of the camera (102);
- on the basis of a machine-learned and/or artificial intelligence-based image analysis method, to detect the headlamp of the vehicle within a camera image and to determine a position of the headlamp (121, 122, 220) within the camera image (200); and
- to align the headlamp setting test device (107) relative to the headlamp (121, 122, 220) of the vehicle (120) depending on the determined position of the headlamp (121, 122, 220) within the camera image (200).

2. Device (101) according to Claim 1, wherein the device (101) is configured, during the approach maneuver of the vehicle (120), repeatedly, in particular periodically,

- to detect a camera image (200) of the headlamp (121, 122, 220) of the vehicle (120) on the basis of the camera (102);
- to determine the position of the headlamp (121, 122, 220) within the respective camera image (200); and
- to align the headlamp setting test device (107) relative to the headlamp (121, 122, 220) of the vehicle (120) depending on the respectively determined position of the headlamp (121, 122, 220) within the respective camera image (200).

3. Device (101) according to Claim 2, wherein the device (101) is configured to repeatedly adapt the alignment of the headlamp setting test device (107) relative to the headlamp (121, 122, 220) of the vehicle (120) during the approach maneuver of the vehicle (120) in such a way that, when the approach maneuver of the vehicle (120) is ended, the headlamp setting test device (107) has a target alignment for carrying out a measurement process for the headlamp (121, 122, 220) of the vehicle (120).

4. Device (101) according to one of the preceding claims, wherein the device (101) is configured

- to determine that the determined position of the headlamp setting test device (107) deviates from a reference position (201) within the camera image (200), in particular from a center point of the camera image (200); and
- to align the headlamp setting test device (107) in order

- to approximate the position of the headlamp (121, 122, 220) to the reference position (201) within a camera image (200) subsequently detected during the approach maneuver; and/or
- to cause the position of the headlamp (121, 122, 220) to correspond to the reference position (201) within a camera image (200) subsequently detected during the approach maneuver.

5. Device (101) according to one of the preceding claims, wherein the device (101) is configured

- to detect a set of different headlamps (121, 122, 220) of the vehicle (120) within the camera image (200);
- to select a first headlamp (121) from the set of headlamps (121, 122, 220);
- to determine the position of the first headlamp (121) within the camera image (200); and
- to align the headlamp setting test device (107) relative to the first headlamp (121) depending on the determined position of the first headlamp (121) within the camera image (200) in order to carry out a measurement process for the first headlamp (121).

6. Device (101) according to Claim 5, wherein the device (101) is configured

- to determine position information (212, 221) relating to a position of at least one second headlamp (122, 220) relative to the first headlamp (121) on the basis of the camera image (200); and
- to align the headlamp setting test device (107) relative to the second headlamp (122, 220) following the measurement process for the first headlamp (121) on the basis of the position information (212, 221) in order to carry out a measurement process for the second headlamp (122, 220).

7. Device (101) according to Claim 6, wherein the position information (212, 221) indicates a transverse offset in the horizontal and/or vertical direction between the first headlamp (121) and the second headlamp (122, 220).

8. Device (101) according to one of Claims 6 to 7, wherein the device (101) is configured to determine the position information (212, 221)

- on the basis of stereoscopic and/or spatial information from the camera image (200); and/or
- on the basis of a temporal sequence of camera images (200) which are detected at a corresponding sequence of points in time during the approach maneuver of the vehicle (120).

9. Device (101) according to one of the preceding claims, wherein the device (101) is configured

    - to determine that the headlamp (121, 122, 220) of the vehicle (120) has reached a target distance from the headlamp setting test device (107) within the scope of the approach process;
    - in response to the determination, to cause the approach process of the vehicle (120) to be ended; and
    - after the approach process is ended, to cause the headlamp setting test device (107) to carry out a measurement process for the headlamp (121, 122, 220) of the vehicle (120).

10. Device (101) according to one of the preceding claims, wherein the device (101) is configured

    - to determine distance information relating to a distance (211) between the headlamp (121, 122, 220) of the vehicle (120) and the headlamp setting test device (107) on the basis of the at least one camera image (200); and
    - to check, on the basis of the distance information, whether or not the headlamp (121, 122, 220) of the vehicle (120) has reached a target distance from the headlamp setting test device (107) within the scope of the approach process in order to carry out a measurement process for the headlamp (121, 122, 220).

11. Device (101) according to one of the preceding claims, wherein the device (101) is configured

    - to determine, on the basis of the camera image (200), whether or not the headlamp (121, 122, 220) of the vehicle (120) emits light; and
    - if it is determined that the headlamp (121, 122, 220) of the vehicle (120) does not emit light, to output an indication to a user of the vehicle (120) and/or of the headlamp setting test device (107), in particular

        - to cause the user to activate the headlamp (121, 122, 220) of the vehicle (120); and/or
        - to inform the user that the headlamp (121, 122, 220) of the vehicle (120) is defective.

12. Device (101) according to one of the preceding claims, wherein the device (101) is configured, on the basis of a machine-learned and/or artificial intelligence-based image analysis method,

    - to detect the headlamp (121, 122, 220) of the vehicle (120) within the camera image (200); and/or
    - to determine the position of the headlamp (121, 122, 220) of the vehicle (120) within the camera image (200); and/or
    - to determine a type of the headlamp (121, 122, 220) from a set of different headlamp types; wherein the set of headlamp types in particular comprises: low beam, high beam and/or fog lamps.

13. Device (101) according to one of the preceding claims, wherein

    - the camera (102) comprises a stereo and/or 3D camera; and/or
    - the camera (102) is fixedly connected to the headlamp setting test device (107), such that a change in the alignment of the headlamp setting test device (107) leads to a corresponding change in an alignment of the camera (102) relative to the headlamp (121, 122, 220) of the vehicle (120); and/or
    - the camera (102) and/or the headlamp setting test device (107) are movable within a plane via one or more guide elements (103, 104) in order to change the alignment of the camera (102) and/or of the headlamp setting test device (107) relative to the headlamp (121, 122, 220) of the vehicle (120).

14. Light robot (100) for checking a headlamp (121, 122, 220) of a vehicle (120); wherein the light robot (100) comprises

    - a headlamp setting test device (107) which is designed to carry out a measurement process for checking the headlamp (121, 122, 220) of the vehicle (120);
    - a camera (102) which is configured to detect a temporal sequence of camera images (200) relating to the headlamp (121, 122, 220) of the vehicle (120) for a corresponding sequence of points in time;
    - one or more guide elements (103, 104) which are configured to change an alignment of the headlamp setting test device (107) relative to the headlamp (121, 122, 220) of the vehicle (120); and
    - a device (101) according to one of the preceding claims.

15. Method (300) for aligning a headlamp setting test device (107) relative to a headlamp (121, 122, 220) of a vehicle (120); wherein the method (300) comprises

    - detecting (301), during an approach maneuver of the vehicle (120) to the headlamp setting test device (107) and on the basis of a camera (102), a temporal sequence of camera images (200) of the headlamp (121, 122, 220) of the vehicle (120) for a corresponding sequence of points in time;

- detecting the headlamp (121, 122, 220) on the basis of a machine-learned and/or artificial intelligence-based image analysis method within a camera image (200) and determining (302) a position of the headlamp (121, 122, 220) within the camera image (200); and

- aligning (303) the headlamp setting test device (107) relative to the headlamp (121, 122, 220) of the vehicle (120) depending on the determined position of the headlamp (121, 122, 220) within the camera image (200).

## Revendications

1. Dispositif (101) d'orientation d'un appareil de contrôle de réglage de phare (107) par rapport à un phare (121, 122, 220) d'un véhicule (120) ; le dispositif (101) étant relié par une technique de signalisation à une caméra (102) et étant conçu pour

- détecter, pendant une manoeuvre d'approche du véhicule (120) vers l'appareil de contrôle de réglage de phare (107), à l'aide de la caméra (102), une séquence temporelle d'images de caméra (200) du phare (121, 122, 220) du véhicule (120) pour une séquence correspondante d'instants ;

- détecter, à l'aide d'une méthode d'analyse d'images apprise par machine et/ou basée sur une intelligence artificielle, le phare du véhicule à l'intérieur d'une image de caméra et déterminer une position du phare (121, 122, 220) à l'intérieur de l'image de caméra (200) ; et

- orienter l'appareil de contrôle de réglage de phare (107) en fonction de la position déterminée du phare (121, 122, 220) à l'intérieur de l'image de caméra (200) par rapport au phare (121, 122, 220) du véhicule (120).

2. Dispositif (101) selon la revendication 1, le dispositif (101) étant conçu pour, pendant la manoeuvre d'approche du véhicule (120),

- détecter, à l'aide de la caméra (102), une image de caméra (200) du phare (121, 122, 220) du véhicule (120) ;

- déterminer la position du phare (121, 122, 220) à l'intérieur de l'image de caméra (200) respective ; et

- orienter l'appareil de contrôle de réglage de phare (107) en fonction de la position respectivement déterminée du phare (121, 122, 220) à l'intérieur de l'image de caméra (200) respective par rapport au phare (121, 122, 220) du véhicule (120).

3. Dispositif (101) selon la revendication 2, le dispositif (101) étant conçu pour adapter l'orientation de l'appareil de contrôle de réglage de phare (107) par rapport au phare (121, 122, 220) du véhicule (120) de manière répétée pendant la manoeuvre d'approche du véhicule (120) de telle sorte qu'à la fin de la manoeuvre d'approche du véhicule (120), l'appareil de contrôle de réglage de phare (107) présente une orientation cible pour effectuer une opération de mesure pour le phare (121, 122, 220) du véhicule (120).

4. Dispositif (101) selon l'une quelconque des revendications précédentes, le dispositif (101) étant conçu pour

- déterminer que la position déterminée de l'appareil de contrôle de réglage de phare (107) s'écarte d'une position de référence (201) à l'intérieur de l'image de caméra (200), en particulier d'un point central de l'image de caméra (200) ; et

- orienter l'appareil de contrôle de réglage de phare (107) pour

- approcher la position du phare (121, 122, 220) à l'intérieur d'une image de caméra (200) détectée ensuite pendant la manoeuvre d'approche de la position de référence (201) ; et/ou

- amener la position du phare (121, 122, 220) à l'intérieur d'une image de caméra (200) détectée ensuite pendant la manoeuvre d'approche à correspondre à la position de référence (201).

5. Dispositif (101) selon l'une quelconque des revendications précédentes, le dispositif (101) étant conçu pour

- détecter, à l'intérieur de l'image de caméra (200), un ensemble de différents phares (121, 122, 220) du véhicule (120) ;

- sélectionner un premier phare (121) parmi l'ensemble de phares (121, 122, 220) ;

- déterminer la position du premier phare (121) à l'intérieur de l'image de caméra (200) ; et

- orienter l'appareil de contrôle de réglage de phare (107) en fonction de la position déterminée du premier phare (121) à l'intérieur de l'image de caméra (200) par rapport au premier phare (121) pour effectuer une opération de mesure pour le premier phare (121).

6. Dispositif (101) selon la revendication 5, le dispositif (101) étant conçu pour

- déterminer, sur la base de l'image de caméra (200), des informations de position (212, 221) concernant une position d'au moins un deuxième phare (122, 220) par rapport au premier phare (121) ; et

- orienter l'appareil de contrôle de réglage de phare (107) à la suite de l'opération de mesure pour le premier phare (121) sur la base des informations de position (212, 221) par rapport au deuxième phare (122, 220) pour effectuer une opération de mesure pour le deuxième phare (122, 220).

7. Dispositif (101) selon la revendication 6, les informations de position (212, 221) indiquant un décalage transversal dans la direction horizontale et/ou verticale entre le premier phare (121) et le deuxième phare (122, 220).

8. Dispositif (101) selon l'une quelconque des revendications 6 à 7, le dispositif (101) étant conçu pour déterminer les informations de position (212, 221)

   - à l'aide d'informations stéréoscopiques et/ou spatiales provenant de l'image de caméra (200) ; et/ou
   - à l'aide d'une séquence temporelle d'images de caméra (200) qui sont détectées à une séquence correspondante d'instants pendant la manoeuvre d'approche du véhicule (120).

9. Dispositif (101) selon l'une quelconque des revendications précédentes, le dispositif (101) étant conçu pour

   - déterminer que le phare (121, 122, 220) du véhicule (120) a atteint une distance cible par rapport à l'appareil de contrôle de réglage de phare (107) dans le cadre de l'opération d'approche ;
   - provoquer, en réaction à la détermination, que l'opération d'approche du véhicule (120) est terminée ; et
   - après la fin de l'opération d'approche, amener l'appareil de contrôle de réglage de phare (107) à effectuer une opération de mesure pour le phare (121, 122, 220) du véhicule (120).

10. Dispositif (101) selon l'une quelconque des revendications précédentes, le dispositif (101) étant conçu pour

    - déterminer, sur la base de l'au moins une image de caméra (200), des informations de distance concernant une distance (211) entre le phare (121, 122, 220) du véhicule (120) et l'appareil de contrôle de réglage de phare (107) ; et
    - vérifier, sur la base des informations de distance, si le phare (121, 122, 220) du véhicule (120) a atteint ou non une distance cible par rapport à l'appareil de contrôle de réglage de phare (107) dans le cadre de l'opération d'approche pour effectuer une opération de mesure pour le phare (121, 122, 220).

11. Dispositif (101) selon l'une quelconque des revendications précédentes, le dispositif (101) étant conçu pour

    - déterminer, sur la base de l'image de caméra (200), si le phare (121, 122, 220) du véhicule (120) émet ou non de la lumière ; et
    - lorsqu'il est déterminé que le phare (121, 122, 220) du véhicule (120) n'émet pas de lumière, émettre une indication à un utilisateur du véhicule (120) et/ou de l'appareil de contrôle de réglage de phare (107), en particulier pour

      - provoquer l'activation par l'utilisateur du phare (121, 122, 220) du véhicule (120) ; et/ou
      - informer l'utilisateur que le phare (121, 122, 220) du véhicule (120) est défectueux.

12. Dispositif (101) selon l'une quelconque des revendications précédentes, le dispositif (101) étant conçu pour, à l'aide d'une méthode d'analyse d'images, en particulier basée sur un apprentissage par machine et/ou basée sur une intelligence artificielle,

    - détecter le phare (121, 122, 220) du véhicule (120) à l'intérieur de l'image de caméra (200) ; et/ou
    - déterminer la position du phare (121, 122, 220) du véhicule (120) à l'intérieur de l'image de caméra (200) ; et/ou
    - déterminer un type du phare (121, 122, 220) parmi un ensemble de différents types de phares ; l'ensemble de types de phares comprenant en particulier : un feu de croisement, un feu de route et/ou un feu antibrouillard.

13. Dispositif (101) selon l'une quelconque des revendications précédentes,

    - la caméra (102) comprenant une caméra stéréo et/ou 3D ; et/ou
    - la caméra (102) étant reliée fixement à l'appareil de contrôle de réglage de phare (107) de sorte qu'une modification de l'orientation de l'appareil de contrôle de réglage de phare (107) conduise à une modification correspondante d'une orientation de la caméra (102) par rapport au phare (121, 122, 220) du véhicule (120) ; et/ou
    - la caméra (102) et/ou l'appareil de contrôle de réglage de phare (107) pouvant être déplacés à l'intérieur d'un plan par le biais d'un ou de plusieurs éléments de guidage (103, 104) afin de modifier l'orientation de la caméra (102) et/ou de l'appareil de contrôle de réglage de phare (107) par rapport au phare (121, 122, 220) du véhicule (120).

14. Robot lumineux (100) destiné à contrôler un phare (121, 122, 220) d'un véhicule (120) ; le robot lumineux (100) comprenant

- un appareil de contrôle de réglage de phare (107) qui est réalisé pour effectuer une opération de mesure pour contrôler le phare (121, 122, 220) du véhicule (120) ;
- une caméra (102) qui est conçue pour détecter une séquence temporelle d'images de caméra (200) concernant le phare (121, 122, 220) du véhicule (120) pour une séquence correspondante d'instants ;
- un ou plusieurs éléments de guidage (103, 104) qui sont conçus pour modifier une orientation de l'appareil de contrôle de réglage de phare (107) par rapport au phare (121, 122, 220) du véhicule (120) ; et
- un dispositif (101) selon l'une quelconque des revendications précédentes.

15. Procédé (300) d'orientation d'un appareil de contrôle de réglage de phare (107) par rapport à un phare (121, 122, 220) d'un véhicule (120) ; le procédé (300) comprenant

- la détection (301), pendant une manoeuvre d'approche du véhicule (120) vers l'appareil de contrôle de réglage de phare (107) et à l'aide d'une caméra (102), d'une séquence temporelle d'images de caméra (200) du phare (121, 122, 220) du véhicule (120) pour une séquence correspondante d'instants ;
- la détection du phare (121, 122, 220) à l'aide d'une méthode d'analyse d'images apprise par machine et/ou basée sur une intelligence artificielle à l'intérieur d'une image de caméra (200) et la détermination (302) d'une position du phare (121, 122, 220) à l'intérieur de l'image de caméra (200) ; et
- l'orientation (303) de l'appareil de contrôle de réglage de phare (107) par rapport au phare (121, 122, 220) du véhicule (120), en fonction de la position déterminée du phare (121, 122, 220) à l'intérieur de l'image de caméra (200).

Zeichnungen

Fig. 1

Fig. 2a

Fig. 2b

Fig. 2c

Fig. 2d

Fig. 2e

```
300 ⤳   ┌──────────────────────────────────────────────────┐
         │ Erfassen eines Bildes des Fahrzeugs, während     │⤳
         │ sich das Fahrzeug dem Messgerät nähert           │   301
         └──────────────────────────────────────────────────┘
                              │
                              ▼
         ┌──────────────────────────────────────────────────┐
         │ Ermitteln einer Position eines Scheinwerfers des │⤳
         │ Fahrzeugs innerhalb des Bildes                   │   302
         └──────────────────────────────────────────────────┘
                              │
                              ▼
         ┌──────────────────────────────────────────────────┐
         │ Ausrichten des Messgeräts in Bezug auf den       │⤳
         │ erkannten Scheinwerfer                           │   303
         └──────────────────────────────────────────────────┘
```

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8582091 B2
- GB 2307312 A